# EUROPEAN PATENT APPLICATION

(11) **EP 4 848 566 A1**
(43) Date of publication of application: **02.12.2026**
(21) Application number: 26181203.6
(22) Date of filing: 27.05.2026
(51) Int. Cl.: H02M 7/5395, H02M 1/08, H02M 1/32, H02M 1/36, H02M 7/487, H02M 7/5387

(54) **CONTROL METHOD FOR PHOTOVOLTAIC INVERTER**

(30) Priority: 27.05.2025 CN 202510696239
(71) Applicant: Huawei Technologies Co., Ltd., Shenzhen, Guangdong 518129 (CN)
(72) Inventor: LI, Junjie, Shenzhen, 518129 (CN); YU, Bo, Shenzhen, 518129 (CN); YU, Xinyu, Shenzhen, 518129 (CN); XIN, Kai, Shenzhen, 518129 (CN)
(74) Representative: Isarpatent

(57) **Abstract**

This application provides a control method for a photovoltaic inverter, applied to the field of power electronics technologies, to avoid a failure of a switching transistor due to excessively high voltage stress and current stress in a process of blocking PWM pulses by the photovoltaic inverter. In the foregoing control method, when a polarity of an output current of an any phase switching transistor bridge arm of the inverter is opposite to a polarity of an output voltage, driving voltages of a first switching transistor and a second switching transistor in the any phase switching transistor bridge arm are controlled to gradually decrease to zero. The first switching transistor is a switching transistor connected to a positive direct current bus in the any phase bridge arm, and the second switching transistor is a switching transistor connected to a negative direct current bus in the any phase bridge arm. Then, after the driving voltages of the first switching transistor and the second switching transistor gradually decrease to zero, switching transistors that are not turned off in the any phase switching transistor bridge arm are controlled to be turned off based on a preset time sequence, so that freewheeling is performed by using freewheeling diodes in time after soft turn-off of the switching transistors, to prevent the switching transistors from being damaged.

## Description

### TECHNICAL FIELD

This application relates to the field of power electronics technologies, and in particular, to a control method for a photovoltaic inverter.

### BACKGROUND

With the increase in the power and voltage levels of a photovoltaic inverter, the power density and operating limit of a power device (for example, a switching transistor) in the photovoltaic inverter also increase. To ensure safety and reliability of the power device, it is necessary to keep the power device operating within a maximum allowable current range in various scenarios, for example, when the inverter blocks PWM pulses. However, in the current photovoltaic inverter, all switching transistors are usually controlled to stop sending PWM driver gating signals at the same time. As a result, the switching transistors of the photovoltaic inverter need to bear high voltage and current stress. This happens especially when the switching transistors of the photovoltaic inverter are triggered to stop sending the PWM driver gating signal with a large current, in which case the switching transistors are prone to fail due to overvoltage stress or overcurrent stress. Therefore, a solution needs to be urgently provided to resolve the foregoing problem.

### SUMMARY

Embodiments of this application provide a control method for a photovoltaic inverter, to avoid a failure of a switching transistor caused by excessively high voltage stress and current stress in a process of stopping sending a PWM driver gating signal by the photovoltaic inverter.

To achieve the foregoing objective, embodiments of this application provide the following technical solutions.

An embodiment of this application provides a control method for a photovoltaic inverter, where the photovoltaic inverter includes a multiphase switching transistor bridge arm connected between a positive direct current bus and a negative direct current bus, each phase switching transistor bridge arm in the multiphase switching transistor bridge arm includes a plurality of switching transistors connected in series between the positive direct current bus and the negative direct current bus, and the control method is used to control the photovoltaic inverter to block PWM pulses. The control method includes: when a polarity of an output current of an any phase switching transistor bridge arm in the multiphase switching transistor bridge arm is opposite to a polarity of an output voltage, controlling driving voltages of a first switching transistor and a second switching transistor in the any phase switching transistor bridge arm to gradually decrease to zero. The first switching transistor is a switching transistor connected to the positive direct current bus in the any phase bridge arm, and the second switching transistor is a switching transistor connected to the negative direct current bus in the any phase bridge arm. Then, after the driving voltages of the first switching transistor and the second switching transistor gradually decrease to zero, switching transistors that are not turned off in the any phase switching transistor bridge arm are controlled to be turned off based on a preset time sequence.

When the photovoltaic inverter blocks PWM pulses, the control method is executed by a controller in the photovoltaic inverter. When the control method provided in this embodiment of this application is performed, in a case in which the polarity of the output current of a one phase switching transistor bridge arm of the multiphase switching transistor bridge arm is opposite to the polarity of the output voltage, the controller first controls the driving voltages of the two switching transistors connected to the positive direct current bus and the negative direct current bus to gradually decrease to zero. Then, the other switching transistors are turned off based on the preset time sequence.

Based on this, in a process of stopping sending a PWM driver gating signal by the photovoltaic inverter, the current and voltage of the bridge arm can decrease more smoothly, and freewheeling is performed by using freewheeling diodes of the switching transistors, thereby avoiding that the switching transistors bear excessively high voltage stress and current stress because the switching transistors are directly turned off in the process of stopping sending the PWM driver gating signal.

In an implementation, after the driving voltages of the first switching transistor and the second switching transistor gradually decrease to zero, when the controller controls the switching transistors that are not turned off in the any phase switching transistor bridge arm to be turned off based on the preset time sequence, the controller controls the switching transistors that are not turned off to be turned off in the following manner: After preset duration in which the driving voltages of the first switching transistor and the second switching transistor gradually decrease to zero, the controller controls the switching transistors that are not turned off in the any phase switching transistor bridge arm to be turned off based on the preset time sequence.

After soft turn-off of two switching transistors connected to the positive direct current bus and the negative direct current bus in a one phase switching transistor bridge arm ends, the controller delays for a period of time and then controls the switching transistors that are not turned off to be turned off based on the preset time sequence. Based on this, when freewheeling is performed by using the freewheeling diodes of the two switching transistors connected to the positive direct current bus and the negative direct current bus, freewheeling can also be performed by using the switching transistors that are not turned off, thereby avoiding that the freewheeling diodes bear an excessively large current impact.

In an implementation, in a process in which the controller controls the switching transistors that are not turned off in the any phase switching transistor bridge arm to be turned off based on the preset time sequence, after the controller controls the polarity of the output current of the any phase switching transistor bridge arm to be the same as the polarity of the output voltage, the controller controls driving voltages of switching transistors used to conduct freewheeling diodes in the any phase switching transistor bridge arm to gradually decrease to zero. After that, the controller controls the switching transistors that are still not turned off in the any phase switching transistor bridge arm to be turned off based on the preset time sequence.

In the foregoing manner, after the two switching transistors connected to the positive direct current bus and the negative direct current bus in the one phase switching transistor bridge arm complete soft turn-off, when the polarity of the output current of the any phase switching transistor bridge arm is the same as the polarity of the output voltage, the controller can control the switching transistors used to conduct the freewheeling diodes to be softly turned off, and perform freewheeling by using the switching transistors that are not turned off, thereby reducing an excessively large current impact on the freewheeling diodes of the corresponding switching transistors.

In an implementation, in a process in which the controller controls the switching transistors that are not turned off in the any phase switching transistor bridge arm to be turned off based on the preset time sequence, when the polarity of the output current of the any phase switching transistor bridge arm is opposite to the polarity of the output voltage, the controller first controls the driving voltages of the switching transistors used to conduct the freewheeling diodes in the any phase switching transistor bridge arm to gradually decrease to zero. After that, the controller controls the switching transistors that are not turned off in the any phase switching transistor bridge arm to be turned off based on the preset time sequence.

In the foregoing manner, when the polarity of the output current of the any phase switching transistor bridge arm is opposite to the polarity of the output voltage, after the two switching transistors connected to the positive direct current bus and the negative direct current bus in the one phase switching transistor bridge arm complete soft turn-off, the controller can continue to control the driving voltages of the switching transistors used to conduct freewheeling diodes in the switching transistor bridge arm to gradually decrease to zero, so that freewheeling is performed by using switching transistors that are not turned off while the corresponding switching transistors are softly turned off, thereby reducing an excessively large current impact on the freewheeling diodes of the corresponding switching transistors.

In an implementation, when the controller controls the driving voltages of the first switching transistor and the second switching transistor in the any phase switching transistor bridge arm to gradually decrease to zero, the output voltage of the any phase switching transistor bridge arm is greater than the first positive voltage, and the output current of the any phase switching transistor bridge arm is less than the first negative current, the controller controls the driving voltages of the first switching transistor and the second switching transistor to gradually decrease to zero. Alternatively, when the output voltage of the any phase switching transistor bridge arm is less than the first negative voltage, and the output current of the any phase switching transistor bridge arm is greater than the first positive current, the controller controls the driving voltages of the first switching transistor and the second switching transistor to gradually decrease to zero.

In the foregoing manner, the controller can control, after the output voltage and the output current of the one phase switching transistor bridge arm have opposite polarities and the output voltage and the output current reach a specific value, the driving voltages of the two switching transistors connected to the positive direct current bus and the negative direct current bus to gradually decrease to zero, to softly turn off the two switching transistors, and avoid a case in which the two switching transistors connected to the positive direct current bus and the negative direct current bus are incorrectly controlled to be softly turned off when the output voltage and the output current of the switching transistor bridge arm normally fluctuate.

In an implementation, the first positive voltage and the first positive current are positively correlated with a voltage between the positive direct current bus and the negative direct current bus, a grid-connected current of the any phase switching transistor bridge arm, and output power of the photovoltaic inverter. The first negative voltage and the first negative current are negatively correlated with the voltage between the positive direct current bus and the negative direct current bus, the grid-connected current of the any phase switching transistor bridge arm, and the output power of the photovoltaic inverter.

When the output voltage or the output current of the switching transistor bridge arm is positive, a larger voltage between the positive direct current bus and the negative direct current bus, a larger grid-connected current of the switching transistor bridge arm, and larger output power of the photovoltaic inverter indicate a larger first positive voltage or first positive current. When the output voltage or the output current of the switching transistor bridge arm is negative, a larger voltage between the positive direct current bus and the negative direct current bus, a larger grid-connected current of the switching transistor bridge arm, and larger output power of the photovoltaic inverter indicate a smaller first negative voltage or first negative current.

Based on this, in different operating conditions, the first positive voltage, the first positive current, the first negative voltage, and the first negative current may be adjusted based on operating parameters of the photovoltaic inverter, to meet requirements of the different operating conditions.

In an implementation, the control method further includes: before the polarity of the output current of the any phase switching transistor bridge arm in the multiphase switching transistor bridge arm is opposite to the polarity of the output voltage, when the polarity of the output current of the any phase switching transistor bridge arm is the same as the polarity of the output voltage, controlling the polarity of the output current of the any phase switching transistor bridge arm to be opposite to the polarity of the output voltage.

Before the polarity of the output current of the one phase switching transistor bridge arm in the multiphase switching transistor bridge arm is opposite to the polarity of the output voltage, when the polarity of the output current of the one phase switching transistor bridge arm is the same as the polarity of the output voltage, the two switching transistors connected to the positive direct current bus and the negative direct current bus are controlled to be turned off, and freewheeling cannot be performed by using freewheeling diodes of the switching transistors. As a result, the switching transistors fail due to overvoltage. Based on this, when the photovoltaic inverter needs to block PWM pulses, and the polarity of the output current of the switching transistor bridge arm is the same as the polarity of the output voltage, the polarity of the output current of the switching transistor bridge arm needs to be controlled to be opposite to the polarity of the output voltage. In this way, freewheeling can be performed by using the freewheeling diodes of the switching transistors after the switching transistors are softly turned off, to prevent the switching transistors from being damaged.

In an implementation, controlling the polarity of the output current of the any phase switching transistor bridge arm in the multiphase switching transistor bridge arm to be opposite to the polarity of the output voltage includes: when a phase of the output voltage lags a phase of the output current, controlling an active current output by the any phase switching transistor bridge arm to be negative and a reactive current to be positive; or when a phase of the output voltage lags a phase of the output current, controlling an active current output by the any phase switching transistor bridge arm to be positive and a reactive current to be positive.

In the foregoing manner, when the phase of the output voltage of each phase switching transistor bridge arm in the photovoltaic inverter lags the phase of the output current, the controller can flexibly control the polarity of the active current output by the switching transistor bridge arm, to control the polarity of the output current and the polarity of the output voltage of the switching transistor bridge arm to be opposite.

In an implementation, when the controller controls the polarity of the output current of the any phase switching transistor bridge arm in the multiphase switching transistor bridge arm to be opposite to the polarity of the output voltage, and a phase of the output voltage leads a phase of the output current, the controller controls an active current output by the any phase switching transistor bridge arm to be negative and a reactive current to be negative. Alternatively, when a phase of the output voltage leads the phase of the output current, an active current output by the any phase switching transistor bridge arm is controlled to be positive and a reactive current is controlled to be negative.

In the foregoing manner, when the phase of the output voltage of each phase switching transistor bridge arm in the photovoltaic inverter leads the phase of the output current, the controller can flexibly control the polarity of the active current output by the switching transistor bridge arm, to control the polarity of the output current and the polarity of the output voltage of the switching transistor bridge arm to be opposite.

In an implementation, the photovoltaic inverter further includes a control switch and a group of alternating current output terminals, a bridge arm midpoint of each phase switching transistor bridge arm in the multiphase switching transistor bridge arm is connected to the group of alternating current output terminals through the control switch, and the foregoing control method further includes: after all switching transistors of each phase switching transistor bridge arm in the multiphase switching transistor bridge arm are turned off, controlling the control switch to be turned off.

When the bridge arm midpoint of each phase switching transistor bridge arm in the multiphase switching transistor bridge arm is connected to the group of alternating current output terminals through the control switch, after the switching transistors of each phase switching transistor bridge arm in the multiphase switching transistor bridge arm are all turned off, the controller controls the control switch to be turned off, so that the switching transistor in the photovoltaic inverter can be further prevented from being damaged by an inrush current of the power grid.

### BRIEF DESCRIPTION OF DRAWINGS

FIG. 1 is a diagram of a photovoltaic power generation system according to an embodiment of this application;
FIG. 2 is a diagram of a switching transistor bridge arm in an inverter circuit according to an embodiment of this application;
FIG. 3 is another diagram of a switching transistor bridge arm in an inverter circuit according to an embodiment of this application;
FIG. 4 is still another diagram of a switching transistor bridge arm in an inverter circuit according to an embodiment of this application;
FIG. 5 is a flowchart of a control method for a photovoltaic inverter according to an embodiment of this application;
FIG. 6 is a diagram of a manner of adjusting a polarity of an output voltage and a polarity of an output current according to an embodiment of this application;
FIG. 7 is another diagram of a manner of adjusting a polarity of an output voltage and a polarity of an output current according to an embodiment of this application;
FIG. 8 is a diagram of a relationship between an output voltage and an output current in a synchronous rotating coordinate system according to an embodiment of this application; and
FIG. 9 is another diagram of a relationship between an output voltage and an output current in a synchronous rotating coordinate system according to an embodiment of this application.

### DESCRIPTION OF EMBODIMENTS

The following describes the technical solutions in embodiments of this application with reference to the accompanying drawings in embodiments of this application.

In embodiments of this application, "a plurality of" means two or more. In addition, in embodiments of this application, the terms "first", "second", and the like do not limit a quantity or an execution sequence. The term "and/or" describes an association relationship between associated objects and may indicate three relationships. For example, A and/or B may indicate the following cases: Only A exists, both A and B exist, and only B exists. A and B may be singular or plural.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relative concept in a specific manner. The terms "coupling" and "connection" in embodiments of this application should be understood in a broad sense. For example, the term may refer to a physical direct connection, or may refer to an indirect connection implemented through an electronic component, for example, a connection implemented through a resistor, an inductor, a capacitor, or another electronic component.

A photovoltaic inverter provided in embodiments of this application may be applicable to a plurality of application fields such as a new energy smart microgrid field, a power transmission and distribution field, a new energy field (for example, a photovoltaic grid-connected field), a photovoltaic power generation field, and an energy storage power generation field. For example, photovoltaic inverter is applicable to a photovoltaic power supply scenario and a photovoltaic energy storage power supply scenario. The following uses the photovoltaic power supply scenario as an example for description.

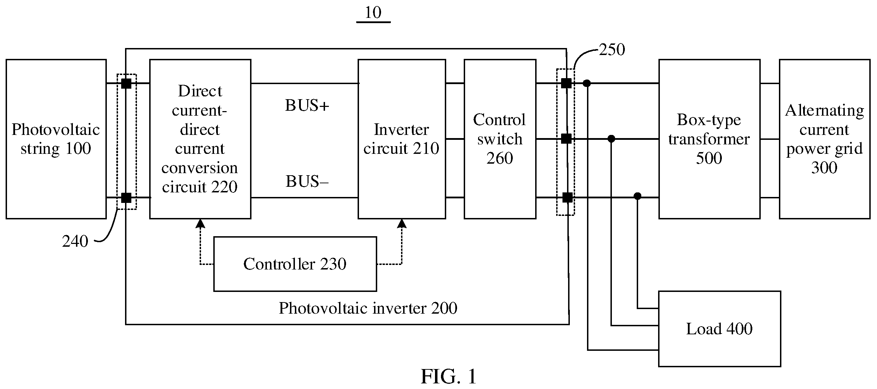

A photovoltaic power generation system (photovoltaic generation system, PGS) is a power generation system that directly converts solar radiation energy into electric energy by using photovoltaic effect of a semiconductor material. FIG. 1 is a diagram of a photovoltaic power generation system 10 according to an embodiment of this application. As shown in FIG. 1, in a photovoltaic power supply application scenario, the photovoltaic power generation system 10 provided in this embodiment of this application includes a photovoltaic string 100 and a photovoltaic inverter 200. The photovoltaic string 100 includes a plurality of photovoltaic modules connected in series. An input end of the photovoltaic inverter 200 is configured to connect to the photovoltaic string 100. An output end of the photovoltaic inverter 200 is configured to connect to a power grid 300 and/or a load 400. The photovoltaic inverter 200 can convert a direct current output by the photovoltaic string 100 into an alternating current, and then supply power to the power grid 300 and/or the load 400 (for example, a household device).

Still as shown in FIG. 1, in an embodiment, when the power grid is a high-voltage power grid, the output end of the photovoltaic inverter 200 is connected to the power grid 300 through a box-type transformer 500. The box-type transformer 500 can boost the alternating current output by the photovoltaic inverter 200 and then transmit the boosted alternating current to the power grid 300.

In an embodiment, still as shown in FIG. 1, the photovoltaic inverter 200 includes a direct current-direct current conversion circuit 220, an inverter circuit 210, and a controller 230. An input end of the direct current-direct current conversion circuit 220 is connected to the photovoltaic string 100 through a pair of photovoltaic terminals 240. An output end of the direct current-direct current conversion circuit 220 is connected to a group of alternating current output terminals 250 through the inverter circuit 210. The group of alternating current output terminals 250 is configured to connect to the power grid 300 and/or the load 400. The direct current-direct current conversion circuit 220 and the inverter circuit 210 are controlled by the controller 230. After the photovoltaic power generation system 10 starts to run, the controller 230 controls the direct current-direct current conversion circuit 220 to perform maximum power point tracking (maximum power point tracking, MPPT) on the photovoltaic string 100 connected to the input end of the direct current-direct current conversion circuit 220, so that output power of the photovoltaic string 100 reaches a maximum value. In addition, the direct current-direct current conversion circuit 220 converts, into a direct current with a voltage of a preset value, a direct current generated by the photovoltaic string 100 connected to the input end of the direct current-direct current conversion circuit 220, and outputs the direct current to the inverter circuit 210. Under control of the controller 230, the inverter circuit 210 converts the direct current output by the direct current-direct current conversion circuit 220 into an alternating current, to supply power to the power grid 300 or the load 400 (for example, the household device).

The controller 230 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

In an embodiment, the photovoltaic inverter 200 further includes a control switch 260. An output end of the inverter circuit 210 is connected to the foregoing group of alternating current output terminals 250 through the control switch 260, and the alternating current output terminal 250 is configured to connect to the power grid 300 and/or the load 400. The control switch 260 may be a relay.

The inverter circuit 210 in the photovoltaic inverter 200 includes a multiphase switching transistor bridge arm. Each phase switching transistor bridge arm in the multiphase switching transistor bridge arm includes a plurality of switching transistors connected in series between a positive direct current bus BUS+ and a negative direct current bus BUS-. A structure of each phase switching transistor bridge arm varies based on different use requirements. The inverter circuit 210 may be a two-level inverter circuit, a three-level inverter circuit, a five-level inverter circuit, or another hybrid multi-level inverter circuit. To facilitate understanding of the control method for the photovoltaic inverter provided in embodiments of this application, the three-level inverter circuit is used for explanation and description in embodiments of this application.

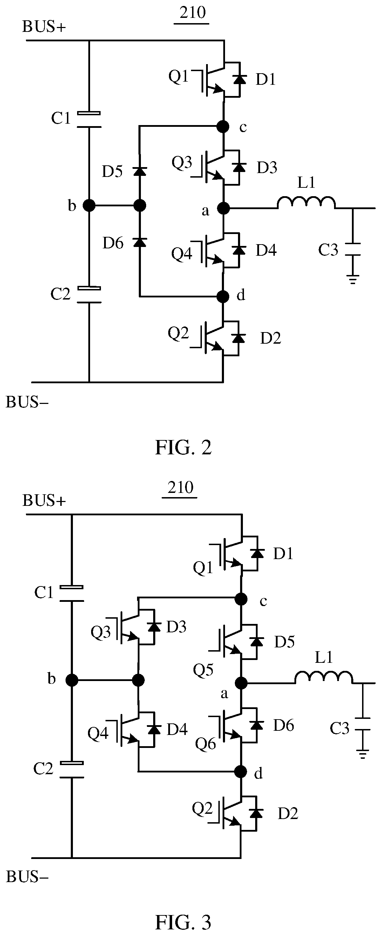

FIG. 2 is a diagram of a switching transistor bridge arm in an inverter circuit according to an embodiment of this application. In an embodiment, as shown in FIG. 2, the inverter circuit 210 is a neutral point clamped (neutral point clamped, NPC) three-level inverter circuit. The inverter circuit 210 includes a first bus capacitor C1 and a second bus capacitor C2. The first bus capacitor C1 and the second bus capacitor C2 are connected in series between the positive direct current bus BUS+ and the negative direct current bus BUS-. Each phase switching transistor bridge arm in the inverter circuit 210 includes a first switching transistor Q1, a second switching transistor Q2, a third switching transistor Q3, a fourth switching transistor Q4, a first diode D1, a second diode D2, a third diode D3, a fourth diode D4, a fifth diode D5, a sixth diode D6, an inductor L1, and a third capacitor C3.

The first switching transistor Q1 and the third switching transistor Q3 are connected in series between a midpoint a of the switching transistor bridge arm and the positive direct current bus BUS+, and the fourth switching transistor Q4 and the second switching transistor Q2 are connected in series between the midpoint a of the switching transistor bridge arm and the negative direct current bus BUS-. The first diode D1 is connected in reverse parallel to the first switching transistor Q1, the second switching transistor Q2 is connected in reverse parallel to the second diode D2, the third switching transistor Q3 is connected in reverse parallel to the third diode D3, and the fourth switching transistor Q4 is connected in reverse parallel to the fourth diode D4. A positive electrode of the fifth diode D5 is connected to a midpoint b of the first bus capacitor C1 and the second bus capacitor C2, and a negative electrode of the fifth diode D5 is connected to a midpoint c of the first switching transistor Q1 and the third switching transistor Q3. A negative electrode of the sixth diode D6 is connected to the midpoint b of the first bus capacitor C1 and the second bus capacitor C2, and a positive electrode of the sixth diode D6 is connected to a midpoint d of the fourth switching transistor Q4 and the second switching transistor Q2. An output voltage and an output current of the midpoint a of the switching transistor bridge arm are further output after being filtered by a filter circuit formed by the inductor L1 and the third capacitor C3.

FIG. 3 is another diagram of a switching transistor bridge arm in an inverter circuit according to an embodiment of this application. In an embodiment, as shown in FIG. 3, the inverter circuit 210 is an active neutral-point-clamped (active neutral-point-clamped, ANPC) three-level inverter circuit. The inverter circuit 210 includes a first bus capacitor C1 and a second bus capacitor C2. The first bus capacitor C1 and the second bus capacitor C2 are connected in series between the positive direct current bus BUS+ and the negative direct current bus BUS-. Each phase switching transistor bridge arm in the inverter circuit 210 includes a first switching transistor Q1, a second switching transistor Q2, a third switching transistor Q3, a fourth switching transistor Q4, a first diode D1, a second diode D2, a third diode D3, a fourth diode D4, a fifth switching transistor Q5, a sixth switching transistor Q6, a fifth diode D5, a sixth diode D6, an inductor L1, and a third capacitor C3.

The first switching transistor Q1 and the fifth switching transistor Q5 are connected in series between a midpoint a of the switching transistor bridge arm and the positive direct current bus BUS+, and the fourth switching transistor Q4 and the sixth switching transistor Q6 are connected in series between the midpoint a of the switching transistor bridge arm and the negative direct current bus BUS-. The first diode D1 is connected in reverse parallel to the first switching transistor Q1, and the second switching transistor Q2 is connected in reverse parallel to the second diode D2. The third switching transistor Q3 and the fourth switching transistor Q4 are connected in series between a midpoint c of the first switching transistor Q1 and the fifth switching transistor Q5 and a midpoint d of the sixth switching transistor Q6 and the second switching transistor Q2. The third switching transistor Q3 is connected in reverse parallel to the third diode D3, the fourth switching transistor Q4 is connected in reverse parallel to the fourth diode D4, the fifth diode D5 is connected in reverse parallel to the fifth switching transistor Q5, and the sixth diode D6 is connected in reverse parallel to the sixth switching transistor Q6. An output voltage and an output current of the midpoint a of the switching transistor bridge arm are further output after being filtered by a filter circuit formed by the inductor L1 and the third capacitor C3.

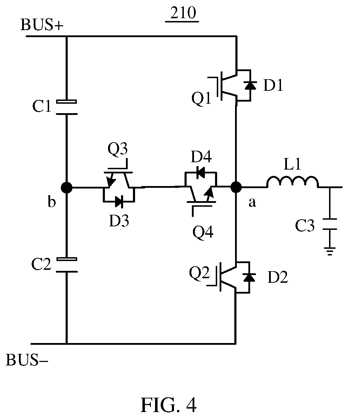

FIG. 4 is still another diagram of a switching transistor bridge arm in an inverter circuit according to an embodiment of this application. In an embodiment, as shown in FIG. 4, the inverter circuit 210 is a T-type three-level inverter circuit. The inverter circuit 210 includes a first bus capacitor C1 and a second bus capacitor C2. The first bus capacitor C1 and the second bus capacitor C2 are connected in series between the positive direct current bus BUS+ and the negative direct current bus BUS-. Each phase switching transistor bridge arm in the inverter circuit 210 includes a first switching transistor Q1, a second switching transistor Q2, a third switching transistor Q3, a fourth switching transistor Q4, a first diode D1, a second diode D2, a third diode D3, a fourth diode D4, an inductor L1, and a third capacitor C3. The first switching transistor Q1 and the second switching transistor Q2 are connected in series between the positive direct current bus BUS+ and the negative direct current bus BUS-. The third switching transistor Q3 and the fourth switching transistor Q4 are connected in series between a midpoint b of the first bus capacitor C1 and the second bus capacitor C2 and a midpoint a of the switching transistor bridge arm. An output voltage and an output current of the midpoint a of the switching transistor bridge arm are further output after being filtered by a filter circuit formed by the inductor L1 and the third capacitor C3.

In an embodiment, the switching transistors in the inverter circuit 210 and the diodes that are connected in reverse parallel to the switching transistors in the foregoing embodiments may be independent components. For example, when an insulated gate bipolar transistor (insulated gate bipolar transistor, IGBT) is selected as the foregoing switching transistor, a diode that is connected in reverse parallel to a switching transistor and the switching transistor are independent components and are packaged in a same module.

In an embodiment, the diode that is connected in reverse parallel to the switching transistor is a parasitic diode of the switching transistor. For example, when the switching transistor is a metal-oxide-semiconductor field-effect transistor (metal-oxide-semiconductor field-effect transistor, MOSFET), the diode that is connected in reverse parallel to each switching transistor is the parasitic diode of the switching transistor.

When the photovoltaic inverter 200 triggers hardware protection, triggers an alarm (for example, triggers overvoltage protection, undervoltage protection, overfrequency protection, underfrequency protection, and residual current operation protection of the power grid), or shuts down normally, the controller 230 needs to control the multiphase switching transistor bridge arm in the inverter circuit 210 to block PWM pulses. However, in a current manner of stopping sending the PWM driver gating signal, the controller directly controls driving voltages of all switching transistors in the inverter circuit 210 to decrease to zero, to stop sending the PWM driver gating signal on all switching transistors at the same time. However, in the foregoing manner, the switching transistors run at a high voltage and a high current, and therefore bear high current stress and voltage stress. Consequently, there is a risk that the switching transistors fail. In addition, when the current is large, directly stopping sending the PWM driver gating signal may cause voltage oscillation after the PWM driver gating signal is stopped to be sent. Voltage oscillation caused by turn-off of the switching transistors may cause the switching transistors to fail due to overvoltage.

To prevent a switching transistor from failing due to excessively high voltage stress and current stress in a process of stopping sending the PWM driver gating signal by the photovoltaic inverter, an embodiment of this application provides a control method for a photovoltaic inverter. The control method is performed by the controller 230 in the photovoltaic inverter 200.

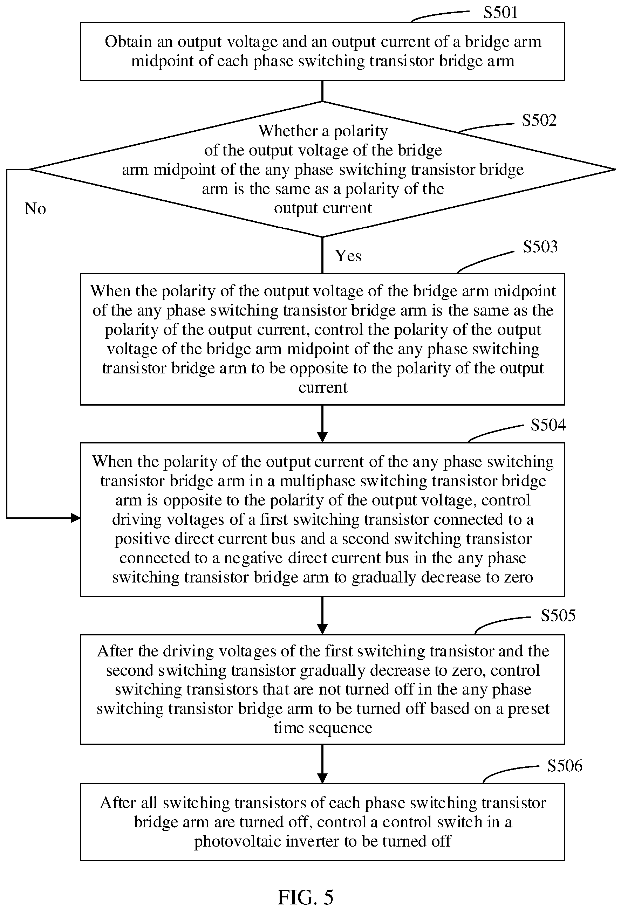

FIG. 5 is a flowchart of a control method for a photovoltaic inverter according to an embodiment of this application. As shown in FIG. 5, in an embodiment, the control method may be performed according to the following steps.

S501: Obtain an output voltage and an output current of a bridge arm midpoint of each phase switching transistor bridge arm.

The controller 230 may obtain an output voltage and an output current of a bridge arm midpoint of an any phase switching transistor bridge arm by using a corresponding current detection circuit and a corresponding voltage detection circuit.

S502: Determine whether a polarity of the output voltage of the bridge arm midpoint on the any phase switching transistor bridge arm is the same as a polarity of the output current. If the polarity of the output voltage of the bridge arm midpoint on the any phase switching transistor bridge arm is the same as the polarity of the output current, S503 is performed. If the polarity of the output voltage of the bridge arm midpoint on the any phase switching transistor bridge arm is not the same as the polarity of the output current, S505 is performed.

S503: When the polarity of the output voltage of the bridge arm midpoint on the any phase switching transistor bridge arm is the same as the polarity of the output current, control the polarity of the output voltage of the bridge arm midpoint on the any phase switching transistor bridge arm to be opposite to the polarity of the output current, and then perform S504.

After the photovoltaic inverter 200 triggers an alarm or shuts down normally, and when the photovoltaic inverter 200 starts to block PWM pulses, if the polarity of the output current of the switching transistor bridge arm is the same as the polarity of the output voltage, a first switching transistor Q1 and a second switching transistor Q2 that are connected to a positive direct current bus BUS+ and a negative direct current bus BUS- are turned off. Consequently, freewheeling cannot be performed by using freewheeling diodes (that is, a first diode D1 and a second diode D2) of the first switching transistor Q1 and the second switching transistor Q2.

When the polarity of the output current of the any phase switching transistor bridge arm is the same as the polarity of the output voltage, the controller 230 first controls the polarity of the output current of the any phase switching transistor bridge arm to be opposite to the polarity of the output voltage, so that after the first switching transistor Q1 and the second switching transistor Q2 are softly turned off, freewheeling can be performed by using the first diode D1 and the second diode D2 respectively.

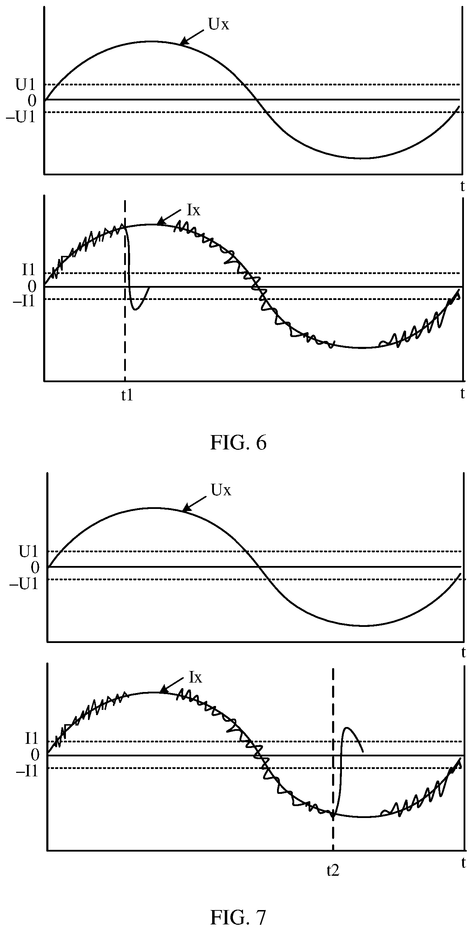

FIG. 6 is a diagram of a manner of adjusting a polarity of an output voltage and a polarity of an output current according to an embodiment of this application. FIG. 7 is another diagram of a manner of adjusting a polarity of an output voltage and a polarity of an output current according to an embodiment of this application. As shown in FIG. 6, when a polarity of an output voltage Ux and a polarity of an output current Ix of a bridge arm midpoint of an any phase switching transistor bridge arm are both positive, after the photovoltaic inverter receives an indication of stopping sending a PWM driver gating signal at a moment t1, the controller 230 controls the output current Ix of the bridge arm midpoint on the any phase switching transistor bridge arm to be negative.

As shown in FIG. 7, when a polarity of an output voltage Ux and a polarity of an output current Ix of a bridge arm midpoint of an any phase switching transistor bridge arm are both negative, after the photovoltaic inverter receives an indication of stopping sending a PWM driver gating signal at a moment t2, the controller 230 controls the output current Ix of the bridge arm midpoint on the any phase switching transistor bridge arm to be positive.

S504: When the polarity of the output current of the any phase switching transistor bridge arm in the multiphase switching transistor bridge arm is opposite to the polarity of the output voltage, control driving voltages of the first switching transistor connected to the positive direct current bus and the second switching transistor connected to the negative direct current bus in the any phase switching transistor bridge arm to gradually decrease to zero.

In the foregoing manner, when the photovoltaic inverter 200 triggers an alarm or shuts down normally, in a process in which the photovoltaic inverter 200 stops sending the PWM driver gating signal, when a polarity of an output current of a one phase switching transistor bridge arm is opposite to a polarity of an output voltage, the photovoltaic inverter 200 may first control driving voltages of two switching transistors (also referred to as outer transistors) connected to the positive direct current bus BUS+ and the negative direct current bus BUS- in the one phase switching transistor bridge arm to gradually decrease to zero, to softly turn off the two switching transistors. In addition, when the polarity of the output current of the switching transistor bridge arm is opposite to the polarity of the output voltage, and switching transistors that are not turned off (also referred to as inner transistors) are alternately turned on, the switching transistors that are not turned off and freewheeling diodes (that is, the first diode D1 and the second diode D2) of the two switching transistors can also provide a freewheeling path, so that the voltage and current of the switching transistor bridge arm decrease more smoothly, and the switching transistors are prevented from bearing high current stress and voltage stress.

In the foregoing implementation process, the polarity of the output current of the switching transistor bridge arm is opposite to the polarity of the output voltage, which may be caused by fluctuation of the output current and the output voltage of the bridge arm midpoint on the switching transistor bridge arm.

In an embodiment, still as shown in FIG. 6 and FIG. 7, when the output voltage Ux of the any phase switching transistor bridge arm is greater than a first positive voltage U1, and the output current Ix of the any phase switching transistor bridge arm is less than a first negative current -11, the controller 230 controls the driving voltages of the first switching transistor Q1 and the second switching transistor Q2 to gradually decrease to zero. Alternatively, when the output voltage Ux of the any phase switching transistor bridge arm is less than a first negative voltage -U1, and an output current Ix of the any phase switching transistor bridge arm is greater than a first positive current I1, the controller 230 controls the driving voltages of the first switching transistor Q1 and the second switching transistor Q2 to gradually decrease to zero. U1≥0, and 11≥0.

In the foregoing manner, the controller 230 can control, after the output voltage Ux and the output current Ix of the one phase switching transistor bridge arm have opposite polarities and the output voltage Ux and the output current Ix exceed a specific value, the driving voltages of the two switching transistors connected to the positive direct current bus BUS+ and the negative direct current bus BUS- to gradually decrease to zero, to softly turn off the two switching transistors, and avoid a case in which the two switching transistors connected to the positive direct current bus BUS+ and the negative direct current bus BUS- are incorrectly controlled to be softly turned off when the output voltage Ux and the output current Ix of the switching transistor bridge arm normally fluctuate.

In an embodiment, the first positive voltage U1 and the first positive current I1 are positively correlated with a voltage between the positive direct current bus BUS+ and the negative direct current bus BUS-, a grid-connected current of the any phase switching transistor bridge arm, and output power of the any phase switching transistor bridge arm. The first negative voltage -U1 and the first negative current -I1 are negatively correlated with the voltage between the positive direct current bus BUS+ and the negative direct current bus BUS-, the grid-connected current of the any phase switching transistor bridge arm, and the output power of the any phase switching transistor bridge arm.

S505: After the driving voltages of the first switching transistor and the second switching transistor gradually decrease to zero, control switching transistors that are not turned off in the any phase switching transistor bridge arm to be turned off based on a preset time sequence.

That the driving voltages of the first switching transistor Q1 and the second switching transistor Q2 gradually decrease to zero indicates that the first switching transistor Q1 and the second switching transistor Q2 have completed soft turn-off. In this case, the controller 230 controls the switching transistors that are not turned off in the any phase switching transistor bridge arm to be turned off based on the preset time sequence, to avoid that the switching transistors fail because the switching transistors are turned off simultaneously and the freewheeling diodes in the switching transistors bear large current stress and voltage stress. The preset time sequence may be set based on a conduction sequence of the switching transistors that are not turned off and current paths of the freewheeling diodes of the switching transistors after the first switching transistor Q1 and the second switching transistor Q2 are turned off.

Each phase switching transistor bridge arms of the inverter circuit 210 may perform soft turn-off simultaneously in the manner of S502 to S505, or perform soft turn-off separately in a specific order. This is not specifically limited in this embodiment of this application.

S506: After all switching transistors of each phase switching transistor bridge arm are turned off, control the control switch in the photovoltaic inverter to be turned off.

When the bridge arm midpoint of each phase switching transistor bridge arm in the multiphase switching transistor bridge arm is connected to a group of alternating current output terminals through the control switch 260, after the switching transistors of each phase switching transistor bridge arm in the multiphase switching transistor bridge arm are all turned off, the controller 230 controls the control switch 260 to be turned off, so that the switching transistors in the photovoltaic inverter 200 can be further prevented from being damaged by an inrush current of the power grid 300.

After the driving voltages of the first switching transistor Q1 and the second switching transistor Q2 gradually decrease to zero, if the controller 230 controls the switching transistors that are not turned off in the any phase switching transistor bridge arm to be directly turned off based on the preset time sequence, an upper bridge arm may completely bear a voltage by using freewheeling diodes (that is, the first diode D1 and the second diode D2), and the switching transistors are prone to fail due to overvoltage.

In an embodiment, after preset duration in which the driving voltages of the first switching transistor Q1 and the second switching transistor Q2 gradually decrease to zero, the controller 230 controls the switching transistors that are not turned off in the any phase switching transistor bridge arm to be turned off based on the preset time sequence. Based on this, when the current and voltage of the bridge arm are more stable after freewheeling is performed by using the freewheeling diodes (that is, the first diode D1 and the second diode D2) of the first switching transistor Q1 and the second switching transistor Q2 for a period of time, the switching transistors that are not turned off in the switching transistor bridge arm are controlled to be turned off based on the preset time sequence. This can avoid that the first diode D1 and the second diode D2 completely bear a voltage when stopping sending a PWM driver gating signal, thereby preventing the switching transistors from bearing high current stress and voltage stress, and avoiding switching transistor failure.

In an embodiment, the preset duration may be within a range from 5 microseconds to 50 microseconds. Certainly, the preset duration may also be adaptively adjusted based on a response speed of the switching transistor, a switching frequency, a bus voltage, a magnitude of a bridge arm current, and the like. This is not specifically limited in this embodiment of this application.

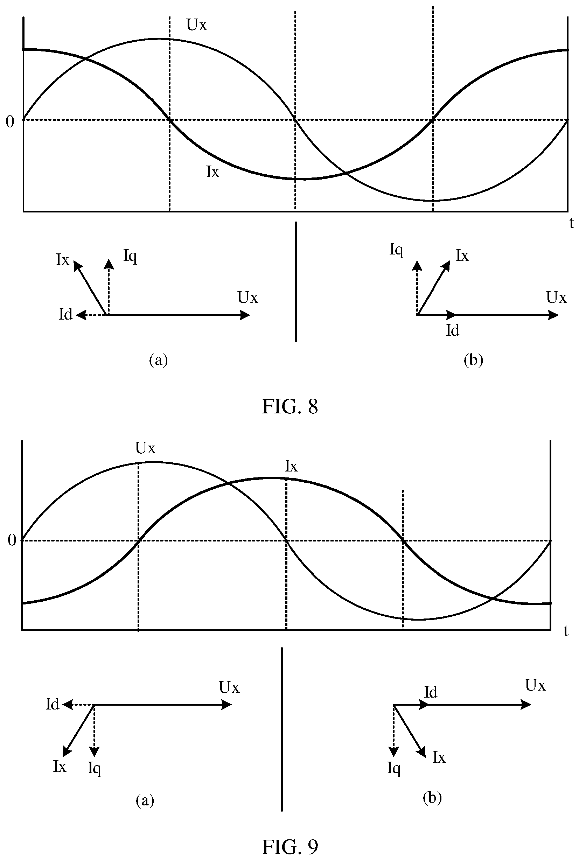

FIG. 8 is a diagram of a relationship between an output voltage and an output current in a synchronous rotating coordinate system according to an embodiment of this application. In an embodiment, when the polarity of the output voltage of the bridge arm midpoint on the any phase switching transistor bridge arm is the same as the polarity of the output current, in a process in which the controller 230 controls the polarity of the output current of the any phase switching transistor bridge arm to be opposite to the polarity of the output voltage, the controller 230 may control, based on a phase relationship between the output voltage and the output current of the bridge arm midpoint on the switching transistor bridge arm, the polarity of the output current of the switching transistor bridge arm to be opposite to the polarity of the output voltage.

As shown in (a) in FIG. 8, when a phase of an output voltage Ux lags a phase of an output current Ix, the controller 230 controls an active current Id output by any phase switching transistor bridge arm to be negative and a reactive current Iq to be positive. Alternatively, as shown in (b) in FIG. 8, when the phase of the output voltage Ux lags the phase of the output current Ix, the controller 230 controls the active current Id output by the bridge arm midpoint of the any phase switching transistor bridge arm to be positive and the reactive current Iq to be positive.

FIG. 9 is another diagram of a relationship between an output voltage and an output current in a synchronous rotating coordinate system according to an embodiment of this application. In an embodiment, as shown in (a) in FIG. 9, when a phase of an output voltage Ux leads a phase of an output current Ix, an active current Id output by any phase switching transistor bridge arm is controlled to be negative, and a reactive current Iq is controlled to be negative. Alternatively, as shown in (b) in FIG. 9, when the phase of the output voltage Ux leads the phase of the output current Ix, the active current Id output by the any phase switching transistor bridge arm is controlled to be positive, and the reactive current Iq is controlled to be negative.

It can be learned from the foregoing content that, on the basis that the reactive current Iq output by the bridge arm midpoint of the any phase switching transistor bridge arm is positive, the active current Id may be negative or positive, so that the polarity of the output current of the switching transistor bridge arm is opposite to the polarity of the output voltage. On the basis that the reactive current Iq output by the bridge arm midpoint of the any phase switching transistor bridge arm is negative, the active current Id may be negative or positive, so that the polarity of the output current of the switching transistor bridge arm is opposite to the polarity of the output voltage.

Therefore, the controller 230 may flexibly select a control manner of the reactive current Iq and the active current Id based on an actual operating condition, to control the polarity of the output current of the switching transistor bridge arm to be opposite to the polarity of the output voltage.

In an embodiment, in a process of performing S505, when the polarity of the output current Ix of the any phase switching transistor bridge arm is opposite to the polarity of the output voltage Ux, the controller 230 first controls the driving voltages of the switching transistors used to conduct freewheeling diodes in the any phase switching transistor bridge arm to gradually decrease to zero. Then, after the driving voltages of the switching transistors used to conduct the freewheeling diodes in the any phase switching transistor bridge arm gradually decrease to zero, the controller 230 controls the switching transistors that are not turned off in the any phase switching transistor bridge arm to be turned off based on the preset time sequence.

In the foregoing manner, the controller 230 can continue to perform soft turn-off on the switching transistors that are used to conduct the freewheeling diodes when the polarity of the output current Ix of the switching transistor bridge arm is opposite to the polarity of the output voltage Ux, thereby further reducing voltage stress and current stress borne by the subsequently turned-off switching transistors.

In an embodiment, in a process of performing S505, when the controller 230 controls the switching transistors that are not turned off in the any phase switching transistor bridge arm to be turned off based on the preset time sequence, after the controller 230 controls the polarity of the output current Ix of the any phase switching transistor bridge arm to be the same as the polarity of the output voltage Ux, the controller 230 controls the driving voltages of the switching transistors used to conduct the freewheeling diodes in the any phase switching transistor bridge arm to gradually decrease to zero. Then, after the driving voltages of the switching transistors used to conduct the freewheeling diodes in the any phase switching transistor bridge arm gradually decrease to zero, the controller 230 controls the switching transistors that are not turned off in the any phase switching transistor bridge arm to be turned off based on the preset time sequence.

In the foregoing manner, after soft turn-off is completed for both the two switching transistors connected to the positive direct current bus BUS+ and the negative direct current bus BUS-, the controller 230 can also first control the polarity of the output current Ix of the any phase switching transistor bridge arm to be the same as the polarity of the output voltage Ux. Then, the controller 230 controls the switching transistors that are used to conduct the freewheeling diodes to be softly turned off, thereby further reducing voltage stress and current stress borne by the subsequently turned-off switching transistors.

To better understand the control method for the photovoltaic inverter provided in embodiments of this application, this application is described in detail by using a plurality of types of three-level inverter circuits in FIG. 2 to FIG. 4.

In an embodiment, when the inverter circuit 210 is the NPC three-level inverter circuit in FIG. 2, and the photovoltaic inverter 200 blocks PWM pulses, the controller 230 obtains, in real time by using a corresponding current and voltage detection circuit, the output voltage Ux and the output current Ix of each phase switching transistor bridge arm in the photovoltaic inverter 200. Then, the controller 230 can select different control policies based on the obtained polarities of the output voltage Ux and the output current Ix.

For example, when the output voltage Ux and the output current Ix of a one phase switching transistor bridge arm are both positive, Ux>U1, and Ix>I1, the controller 230 controls the output voltage Ux and the output current Ix of the corresponding switching transistor bridge arm to have opposite polarities. In other words, Ux>U1, and Ix<-I1.

When the output voltage Ux and the output current Ix of the switching transistor bridge arm have opposite polarities, Ux>U1, and Ix<-I1, the controller 230 controls the driving voltages of the first switching transistor Q1 and the second switching transistor Q2 of the corresponding switching transistor bridge arm to gradually decrease to zero, to softly turn off the first switching transistor Q1 and the second switching transistor Q2.

After the preset duration in which the driving voltages of the first switching transistor Q1 and the second switching transistor Q2 gradually decrease to zero, the controller 230 controls the switching transistors that are not turned off to be turned off in sequence based on the preset time sequence. Because the polarity of the output voltage and the polarity of the output current corresponding to freewheeling of the freewheeling diode of each switching transistor are different, when all switching transistors of the switching transistor bridge arm need to be controlled to perform soft turn-off, soft turn-off needs to be performed after the polarities of the output voltage and the output current meet corresponding conditions.

In an embodiment, after the controller 230 controls Ux>U2 and Ix>I2, or controls 0≤Ux<U2 and Ix>I2, the controller 230 controls a fourth switching transistor Q4 to be softly turned off. After the preset duration in which the fourth switching transistor Q4 is softly turned off, the controller 230 controls Ux>U2 and Ix<-I2, or controls 0≤Ux<U2 and Ix<-I2, and then controls a third switching transistor Q3 to be softly turned off.

Finally, after all switching transistors in the switching transistor bridge arms are turned off, the controller 230 controls the control switch 260 to be turned off.

In an embodiment, when both the output voltage Ux and the output current Ix of a one phase switching transistor bridge arm are negative, Ux<-U1, and Ix<-I1, the controller 230 controls the output voltage Ux and the output current Ix of the corresponding phase switching transistor bridge arm to have opposite polarities. In other words, Ux<-U1, and Ix>I1.

When the output voltage Ux and the output current Ix of the one phase switching transistor bridge arm have opposite polarities, Ux<-U1, and Ix>I1, the controller 230 controls the driving voltages of the first switching transistor Q1 and the second switching transistor Q2 of the corresponding switching transistor bridge arm to gradually decrease to zero, to softly turn off the first switching transistor Q1 and the second switching transistor Q2.

Based on a same technical principle, after the preset duration in which the driving voltages of the first switching transistor Q1 and the second switching transistor Q2 gradually decrease to zero, the controller 230 controls the switching transistors that are not turned off to be turned off in sequence based on the preset time sequence. Details are not described herein in this embodiment of this application.

In an embodiment, when the inverter circuit 210 is the ANPC three-level inverter circuit in FIG. 3, the soft turn-off manner of the first switching transistor Q1 and the second switching transistor Q2 may be performed with reference to the manner described in the foregoing embodiment. Details are not described herein in this embodiment of this application.

After the first switching transistor Q1 and the second switching transistor Q2 are softly turned off, the controller 230 may control Ux>U2 and Ix>I2, or Ux<-U2 and Ix<-I2, and then control the third switching transistor Q3 and/or the fourth switching transistor Q4 to be softly turned off. Then, after the preset duration in which the third switching transistor Q3 and the fourth switching transistor Q are softly turned off, the controller 230 controls Ux>U2 and Ix<-I2, or Ux<-U2 and Ix>-I2. Then, the controller 230 controls the fifth switching transistor Q5 and/or the sixth switching transistor Q6 to be softly turned off. Finally, after all switching transistors in the switching transistor bridge arms are turned off, the controller 230 controls the control switch 260 to be turned off.

In an embodiment, when the inverter circuit 210 is the T-type three-level inverter circuit in FIG. 4, the soft turn-off manner of the first switching transistor Q1 and the second switching transistor Q2 may be performed with reference to the manner described in the foregoing embodiment. Details are not described herein in this embodiment of this application.

After the first switching transistor Q1 and the second switching transistor Q2 are softly turned off, the third switching transistor Q3 is controlled to be softly turned off after Ux>U2 and Ix>I2 are controlled, or after 0≤Ux<U2 and Ix>I2 are controlled. After the preset duration in which the fourth switching transistor Q4 is softly turned off, after the controller 230 controls Ux>U2 and Ix< - 12, or controls 0≤Ux<U2 and Ix< - 12, the controller 230 controls the fourth switching transistor Q4 to be softly turned off. Finally, after all switching transistors in the switching transistor bridge arms are turned off, the controller 230 controls the control switch 260 to be turned off.

In the several embodiments provided in this application, it should be understood that the disclosed system, circuit, and component may be implemented in another manner. For example, the described component embodiment is merely an example. For example, division into circuits and modules is merely logical function division and may be other division in actual implementation. For example, a plurality of modules or components may be combined or integrated into another device, or some features may be ignored or not performed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method for a photovoltaic inverter, wherein the photovoltaic inverter comprises a multiphase switching transistor bridge arm connected between a positive direct current bus and a negative direct current bus, each phase switching transistor bridge arm in the multiphase switching transistor bridge arm comprises a plurality of switching transistors connected in series between the positive direct current bus and the negative direct current bus, the control method is used to control the photovoltaic inverter to block PWM pulses, and the control method comprises:
when a polarity of an output current of an any phase switching transistor bridge arm in the multiphase switching transistor bridge arm is opposite to a polarity of an output voltage, controlling driving voltages of a first switching transistor and a second switching transistor in the any phase switching transistor bridge arm to gradually decrease to zero, wherein the first switching transistor is a switching transistor connected to the positive direct current bus in the any phase bridge arm, and the second switching transistor is a switching transistor connected to the negative direct current bus in the any phase bridge arm; and
after the driving voltages of the first switching transistor and the second switching transistor gradually decrease to zero, controlling switching transistors that are not turned off in the any phase switching transistor bridge arm to be turned off based on a preset time sequence.

2. The control method according to claim 1, wherein after the driving voltages of the first switching transistor and the second switching transistor gradually decrease to zero, controlling the switching transistors that are not turned off in the any phase switching transistor bridge arm to be turned off based on the preset time sequence comprises:
after preset duration in which the driving voltages of the first switching transistor and the second switching transistor gradually decrease to zero, controlling the switching transistors that are not turned off in the any phase switching transistor bridge arm to be turned off based on the preset time sequence.

3. The control method according to claim 1 or 2, wherein controlling the switching transistors that are not turned off in the any phase switching transistor bridge arm to be turned off based on the preset time sequence comprises:
after controlling the polarity of the output current of the any phase switching transistor bridge arm to be the same as the polarity of the output voltage, controlling driving voltages of switching transistors used to conduct freewheeling diodes in the any phase switching transistor bridge arm to gradually decrease to zero; and
after controlling the driving voltages of the switching transistors used to conduct the freewheeling diodes in the any phase switching transistor bridge arm to gradually decrease to zero, controlling switching transistors that are still not turned off in the any phase switching transistor bridge arm to be turned off based on the preset time sequence.

4. The control method according to claim 1 or 2, wherein controlling the switching transistors that are not turned off in the any phase switching transistor bridge arm to be turned off based on the preset time sequence comprises:
when the polarity of the output current of the any phase switching transistor bridge arm is opposite to the polarity of the output voltage, controlling driving voltages of switching transistors used to conduct freewheeling diodes in the any phase switching transistor bridge arm to gradually decrease to zero; and
after controlling the driving voltages of the switching transistors used to conduct the freewheeling diodes in the any phase switching transistor bridge arm to gradually decrease to zero, controlling switching transistors that are still not turned off in the any phase switching transistor bridge arm to be turned off based on the preset time sequence.

5. The control method according to any one of claims 1 to 4, wherein controlling the driving voltages of the first switching transistor and the second switching transistor in the any phase switching transistor bridge arm to gradually decrease to zero comprises:
when the output voltage of the any phase switching transistor bridge arm is greater than a first positive voltage, and the output current of the any phase switching transistor bridge arm is less than a first negative current, controlling the driving voltages of the first switching transistor and the second switching transistor to gradually decrease to zero; or
when the output voltage of the any phase switching transistor bridge arm is less than a first negative voltage, and the output current of the any phase switching transistor bridge arm is greater than a first positive current, controlling the driving voltages of the first switching transistor and the second switching transistor to gradually decrease to zero.

6. The control method according to claim 5, wherein
the first positive voltage and the first positive current are positively correlated with a voltage between the positive direct current bus and the negative direct current bus, a grid-connected current of the any phase switching transistor bridge arm, and output power of the any phase switching transistor bridge arm; and
the first negative voltage and the first negative current are negatively correlated with the voltage between the positive direct current bus and the negative direct current bus, the grid-connected current of the any phase switching transistor bridge arm, and the output power of the any phase switching transistor bridge arm.

7. The control method according to any one of claims 1 to 6, wherein the control method further comprises:
before the polarity of the output current of the any phase switching transistor bridge arm in the multiphase switching transistor bridge arm is opposite to the polarity of the output voltage, when the polarity of the output current of the any phase switching transistor bridge arm is the same as the polarity of the output voltage, controlling the polarity of the output current of the any phase switching transistor bridge arm to be opposite to the polarity of the output voltage.

8. The control method according to claim 7, wherein controlling the polarity of the output current of the any phase switching transistor bridge arm in the multiphase switching transistor bridge arm to be opposite to the polarity of the output voltage comprises:
when a phase of the output voltage lags a phase of the output current, controlling an active current output by the any phase switching transistor bridge arm to be negative and a reactive current to be positive; or
when a phase of the output voltage lags a phase of the output current, controlling an active current output by the any phase switching transistor bridge arm to be positive and a reactive current to be positive.

9. The control method according to claim 7, wherein controlling the polarity of the output current of the any phase switching transistor bridge arm in the multiphase switching transistor bridge arm to be opposite to the polarity of the output voltage comprises:
when a phase of the output voltage leads a phase of the output current, controlling an active current output by the any phase switching transistor bridge arm to be negative and a reactive current to be negative; or
when a phase of the output voltage leads a phase of the output current, controlling an active current output by the any phase switching transistor bridge arm to be positive and a reactive current to be negative.

10. The control method according to any one of claims 1 to 9, wherein the photovoltaic inverter further comprises a control switch and a group of alternating current output terminals, a bridge arm midpoint of each phase switching transistor bridge arm in the multiphase switching transistor bridge arm is connected to the group of alternating current output terminals through the control switch, and the control method further comprises:
after all switching transistors of each phase switching transistor bridge arm in the multiphase switching transistor bridge arm are turned off, controlling the control switch to be turned off.
